(19) Europäisches Patentamt / European Patent Office / Office européen des brevets

(11) **EP 2 124 430 B1**

(12) **EUROPEAN PATENT SPECIFICATION**

(45) Date of publication and mention
of the grant of the patent:
**06.11.2013 Bulletin 2013/45**

(51) Int Cl.:
*H04N 5/14* (2006.01)    *H04N 5/44* (2011.01)
*H04N 7/01* (2006.01)    *H04N 5/21* (2006.01)

(21) Application number: **09158048.0**

(22) Date of filing: **16.04.2009**

(54) **Frame rate conversion apparatus, frame rate conversion method, and computer-readable storage medium**

Vorrichtung zur Umwandlung von Bildfolgefrequenzen, Verfahren zur Umwandlung von Bildfolgefrequenzen und computerlesbarer Datenträger

Appareil de conversion de fréquence d'image, procédé de conversion de fréquence d'image, et support de stockage lisible sur ordinateur

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.05.2008 JP 2008119988**

(43) Date of publication of application:
**25.11.2009 Bulletin 2009/48**

(73) Proprietor: **Canon Kabushiki Kaisha**
**Tokyo 146-8501 (JP)**

(72) Inventor: **Miyoshi, Ai**
**Tokyo 146-8501 (JP)**

(74) Representative: **TBK**
**Bavariaring 4-6**
**80336 München (DE)**

(56) References cited:
**EP-A- 0 339 365        EP-A- 1 008 980**
**EP-A- 1 786 200        WO-A-00/19713**
**DE-C1- 4 327 733       GB-A- 2 031 686**
**GB-A- 2 092 858        JP-A- 2001 296 841**
**US-A1- 2007 273 628**

- **OLUKAYODE ANTHONY OJO ET AL: "ROBUST MOTION-COMPENSATED VIDEO UPCONVERSION" 19971101, vol. 43, no. 4, 1 November 1997 (1997-11-01), pages 1045-1056, XP011008517**
- **BLUME H: "Nonlinear vector error tolerant interpolation of intermediate video images by weighted medians - deterministic properties" SIGNAL PROCESSING. IMAGE COMMUNICATION, ELSEVIER SCIENCE PUBLISHERS, AMSTERDAM, NL, vol. 14, no. 10, 1 August 1999 (1999-08-01), pages 851-868, XP004173770 ISSN: 0923-5965**

**Description**

BACKGROUND OF THE INVENTION

Field of the Invention

The present invention relates to a frame rate conversion apparatus, frame rate conversion method, and computer-readable storage medium which convert the frame rate of an input image (input-frame).

Description of the Related Art

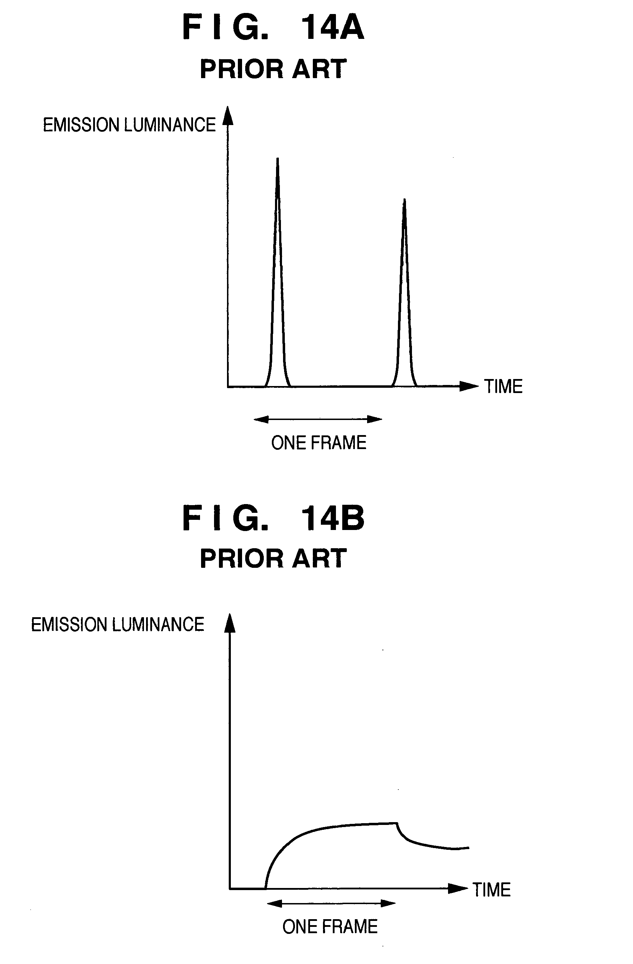

Display apparatuses are roughly classified according to their display characteristics into either impulse type or hold type. An apparatus such as a liquid crystal panel which holds display almost uniformly during one frame period as shown in Fig. 14B will be referred to as a hold type display apparatus. In contrast, an apparatus with a short period of light emission in one frame as shown in Fig. 14A will be referred to as an impulse type display apparatus.

Impulse type display apparatuses include a CRT (Cathode Ray Tube) and a field emission type display. In impulse type display, pixels repeatedly blink, and hence the display has a characteristic that causes flicker. That is, the screen appears to flicker. A higher luminosity and larger area correspond to easier flicker detection. With the recent tendency toward larger display screens, flicker on impulse type display apparatuses is increasingly becoming a problem to be solved.

Methods of reducing flicker include a method of displaying an image at a higher frame rate by distributing an input-frame into a plurality of sub-frames at an arbitrary ratio. If, for example, the frame rate is doubled by distributing an input-frame into two sub-frames at a ratio of 6 : 4, since the frequency of flickering increases, flicker becomes difficult to detect.

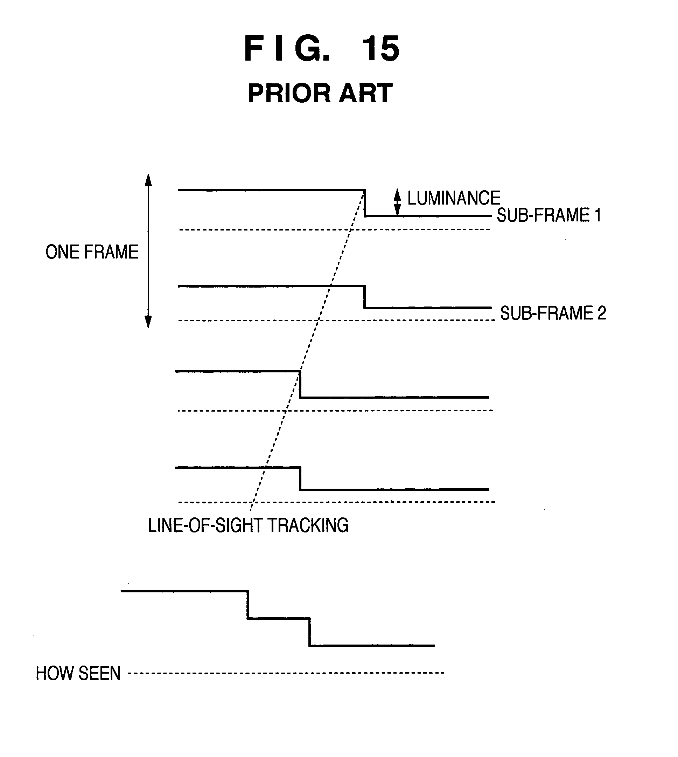

However, when a user views this display, as shown in Fig. 15, pseudo-contour which depends on a visual characteristic occurs because a temporally succeeding sub-frame can be seen to shift from line-of-sight tracking during a given frame period.

In addition, when a scene with a vigorous motion or the like is displayed, trailing-blur sometimes occurs. As a technique of dealing with such trailing-blur, a technique of attenuating the pixel value of part of a sub-frame in accordance with the motion amount (vector) of the frame is known (Japanese Patent Laid-Open No. 2007-052184). A pixel value is alternately attenuated for each pixel between sub-frames.

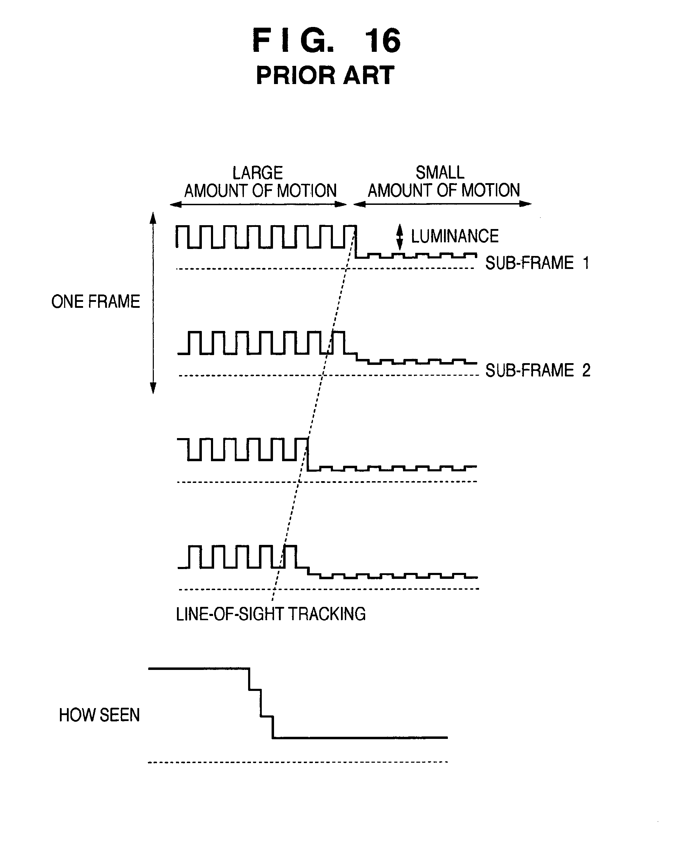

According to the technique disclosed in Japanese Patent Laid-Open No. 2007-052184, a pseudo-contour is generated because even in a motion region half the number of luminance-bearing pixels exist in a temporally succeeding output sub-frame. Fig. 16 is a view showing the relationship between an outline of a display output when the technique in Japanese Patent Laid-Open No. 2007-052184 is used and the manner of how the display output is visually perceived. Obviously, the luminance of a sub-frame at an end portion of the motion region is seen as a pseudo-contour. US 2007/273628 discloses frame rate doubling creating two subframes out of one input frame.

SUMMARY OF THE INVENTION

The present invention provides a frame rate conversion apparatus, frame rate conversion method, and computer-readable storage medium which reduce pseudo-contour and image collapse while maintaining the effect of reducing flicker.

According to a first aspect of the present invention there is provided a frame rate conversion apparatus according to claims 1 to 6.

According to a second aspect of the present invention there is provided a frame rate conversion method according to claim 7.

According to a third aspect of the present invention there is provided a computer-readable storage medium according to claim 8.

Further features of the present invention will be apparent from the following description of exemplary embodiments with reference to the attached drawings.

BRIEF DESCRIPTION OF THE DRAWINGS

Fig. 1 is a block diagram showing an example of the schematic arrangement of a frame rate conversion apparatus according to an embodiment of the present invention;

Fig. 2 is a graph showing an example of an input/output relationship in a distribution processing unit 106 shown in Fig. 1;

Fig. 3 is a flowchart showing an example of processing in a motion region detection unit 103 shown in Fig. 1;

Fig. 4 is a graph showing an example of a method of calculating a degree M of motion in the motion region detection unit 103 shown in Fig. 1;

Fig. 5 is a flowchart showing an example of processing in a distribution correction coefficient generating unit 104 shown in Fig. 1;

Fig. 6 is a view showing an example of an outline of processing in the distribution correction coefficient generating unit 104;

Fig. 7 is a view showing an example of an outline of processing in the distribution correction coefficient generating unit 104 (without execution of comparison reduction filter processing);

Fig. 8 is a view showing an example of an outline of a display output when no comparison reduction filter processing is performed and an outline of the manner of how the display output is visually perceived;

Figs. 9A to 9C are views each showing an example of an emission luminance;

Fig. 10 is a view showing an example of an outline of a display output in the case shown in Fig. 9C and an example of an outline of the manner of how the display output is visually perceived;

Fig. 11 is a flowchart showing an example of a processing sequence in the frame rate conversion apparatus shown in Fig. 1;

Fig. 12 is a flowchart showing an example of processing in the motion region detection unit 103 according to a modification;

Fig. 13 is a graph showing an example of a method of calculating a degree M of motion in the motion region detection unit 103 according to the modification;

Figs. 14A and 14B are graphs each showing an example of an emission luminance in a display apparatus;

Fig. 15 is a first view showing an example of an outline of a display output and an example of the manner of how the display output is visually perceived in the prior art; and

Fig. 16 is a second view showing an example of an outline of a display output and an example of the manner of how the display output is visually perceived in the prior art.

DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

(Embodiment)

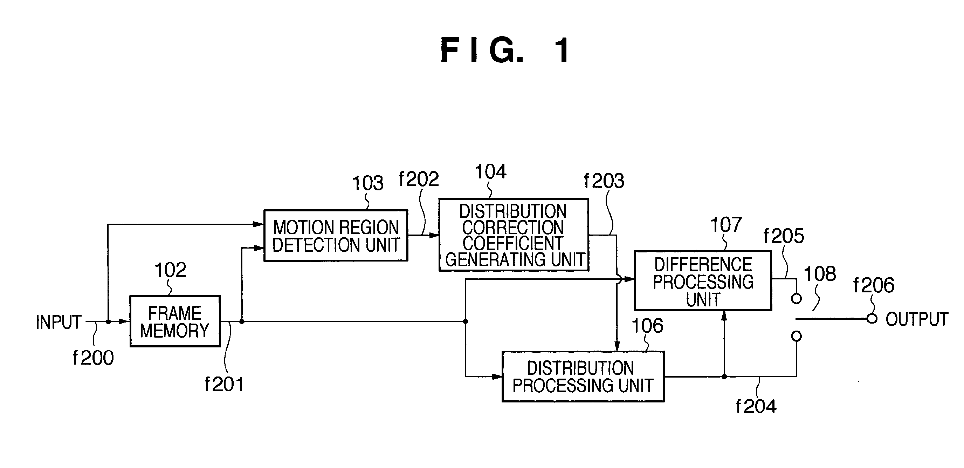

Fig. 1 is a block diagram showing an example of the schematic arrangement of a frame rate conversion apparatus according to an embodiment of the present invention.

The frame rate conversion apparatus incorporates a computer. The computer includes a main control unit such as a CPU and storage units such as a ROM (Read Only Memory) and a RAM (Random Access Memory). The computer may also include, for example, an input/output unit such as a display or a touch panel, and a communication unit such as a network card. Note that these constituent elements are connected via a bus or the like and are controlled by making the main control unit execute the programs stored in the storage unit.

The frame rate conversion apparatus distributes an input image (to be referred to as an input-frame hereinafter) into a plurality of sub-frames and outputs them at a plural (integer) multiple of the frame rate. In distributing an input-frame, the motion of each region in the input-frame is detected from an inter-frame difference, and distribution is performed with the detection result on the motion being reflected in each region in a sub-frame. Note that this embodiment will exemplify a case in which the frame rate of an input-frame is doubled by frame rate conversion.

The frame rate conversion apparatus converts the frame rate of an input-frame to reduce flickering on the screen, that is, the occurrence of flicker. The frequency of occurrence of flicker is associated with the contrast between distributed sub-frames. That is, in the case shown in Fig. 1, the occurrence of flicker is influenced by the contrast relationship between a sub-frame f204 and a sub-frame f205. The larger the luminance difference between them, the more easily flicker is detected, and vice versa. Note that the sub-frame f204 is output as a temporally succeeding sub-frame in one frame period, and the sub-frame f205 is output as a temporally preceding frame in one frame period.

The frame rate conversion apparatus controls the contrast between the sub-frame f204 and the sub-frame f205 for each region in each sub-frame. This control is performed on the basis of the relationship between the motion of each region detected between the respective frames and flicker. The sum of the luminances of the sub-frames f204 and f205 is equal to the luminance of a frame f201 held in a frame memory 102. That is, the luminance remains the same before and after frame rate conversion.

In this case, the frame rate conversion apparatus includes, as its functional constituent elements, a frame memory 102, a motion region detection unit 103, a distribution correction coefficient generating unit 104, a distribution processing unit 106, a difference processing unit 107, and a switch 108.

The frame memory 102 sequentially holds one or more input-frames. The motion region detection unit 103 compares the frame f201 held in the frame memory 102 with an input-frame f200, calculates a degree M of motion of each region in the frame f201 held in the frame memory 102, and outputs a degree-of-motion map $M_{map}$.

The distribution correction coefficient generating unit 104 executes filter processing for the degree-of-motion map $M_{map}$ and outputs the result as a distribution correction coefficient map $R_{map}$ to the distribution processing unit 106. The distribution processing unit 106 converts the value of the frame f201 held in the frame memory 102 in accordance with a basic distribution function and the distribution correction coefficient map $R_{map}$, and outputs the sub-frame f204 as the first sub-frame.

The difference processing unit 107 generates and outputs the sub-frame f205 as the second sub-frame on the basis of the sub-frame f204 and the frame f201 held in the frame memory 102. The switch 108 alternately switches and outputs the sub-frame f204 and the sub-frame f205.

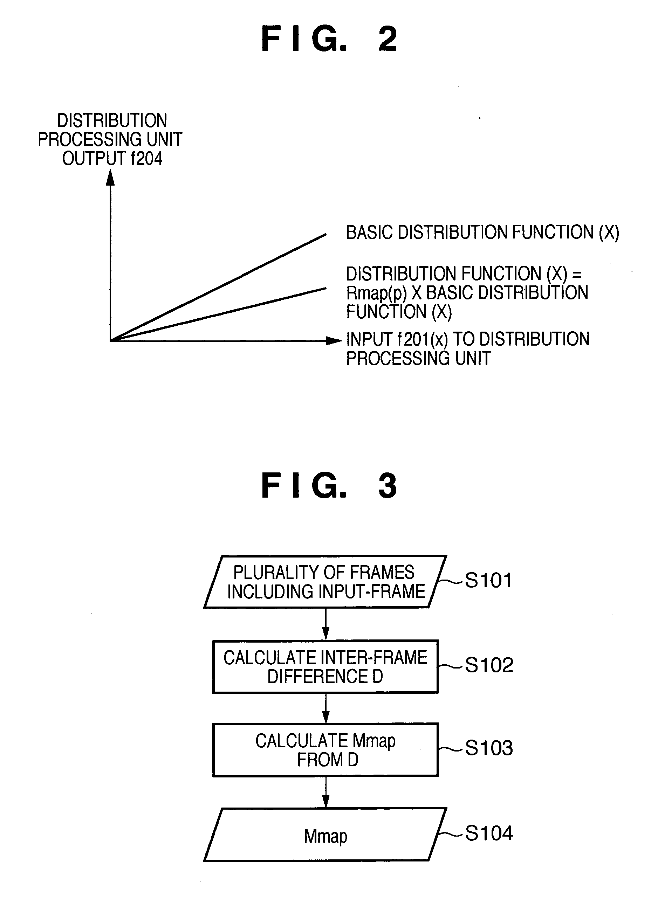

Fig. 2 is a view showing an example of an input/output relationship in the distribution processing unit 106. The distribution processing unit 106 converts each value of the input f201 to the distribution processing unit 106 in accordance with the basic distribution function and the distribution correction coefficient map $R_{map}$, and outputs the result as the sub-frame f204 (see equation (1)). The basic distribution function indicates the value of the sub-frame f204 when the input is a still image (at the time of still image capturing).

$$S(p) = \text{basic distribution function } (fin(p)) \times Rmap(p) \qquad ...(1)$$

where fin is an input frame, S is an output frame, and p is the position of a pixel of interest.

The value of each region in the sub-frame f204 dynamically increases/decreases in accordance with the value of the distribution correction coefficient map $R_{map}$. For example, as the value of a distribution correction coefficient R for a region with a large amount of motion decreases, the value of a corresponding region in the sub-frame f204 decreases. With this operation, since the value of a region with a large amount of motion in a sub-frame output as a temporally succeeding sub-frame in one frame period decreases, the pseudo-contour and trailing-blur are improved.

Fig. 3 is a flowchart showing an example of processing in the motion region detection unit 103.

The motion region detection unit 103 calculates an inter-frame difference from an input-frame and a frame input before (e.g., immediately before) the input-frame (steps S101 and S102). The motion region detection unit 103 calculates and outputs the degree M of motion from the difference value (steps S103 and S104). The degree M of motion is output as $M_{map}$ in the form of a map (two-dimensional map) having a degree of motion for each region. This embodiment will exemplify a case in which a region is a single pixel. However, a region may be a predetermined range of a plurality of pixels (N x N pixels). If a plurality of pixels constitute a region, the region can be processed by the same processing as that for the region formed by a single pixel by processing the average value or the like of the plurality of pixels as the region.

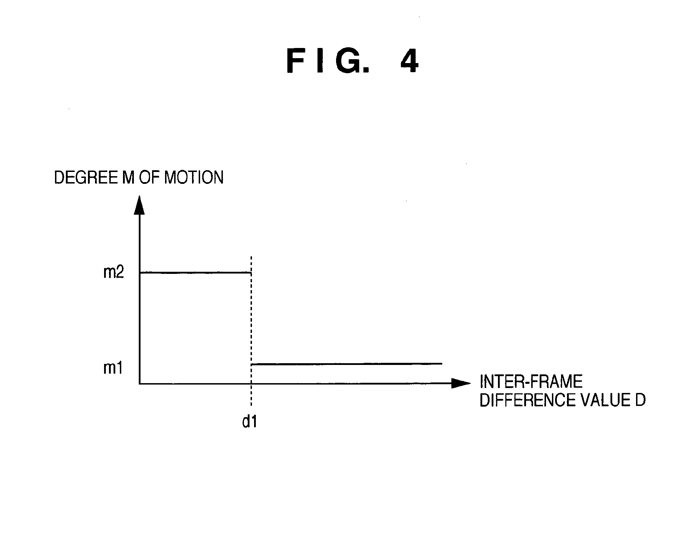

Fig. 4 is a graph showing an example of the relationship between an inter-frame difference value D and the degree M of motion. As shown in Fig. 4, as the inter-frame difference value D increases, the detected degree M of motion tends to decrease. That is, in this embodiment, since the degree M of motion indicates the degree of stillness, the degree M of motion is high in a region with a small amount of motion and low in a region with a large amount of motion. Although this embodiment will be described by referring to a case in which the degree M of motion indicates the degree of stillness, it is obvious that the embodiment can be applied to a case opposite to the above case.

The motion region detection unit 103 calculates the degree of motion of each region in the frame f201 held in the frame memory 102 by executing threshold processing with a relatively low processing load. More specifically, if the inter-frame difference value is smaller than a (predetermined) threshold d1, the motion region detection unit 103 outputs m2 as a degree of motion. If the inter-frame difference value is larger than the threshold d1, the motion region detection unit 103 outputs m1 as a degree of motion. This threshold processing is performed for each inter-frame difference value calculated in accordance with each region. As a result, $M_{map}$ in the form of a map is output as a degree of motion. Note that m1 and m2 are, for example, greater than or equal to 0 and less than or equal to 1, and m2 is larger than m1.

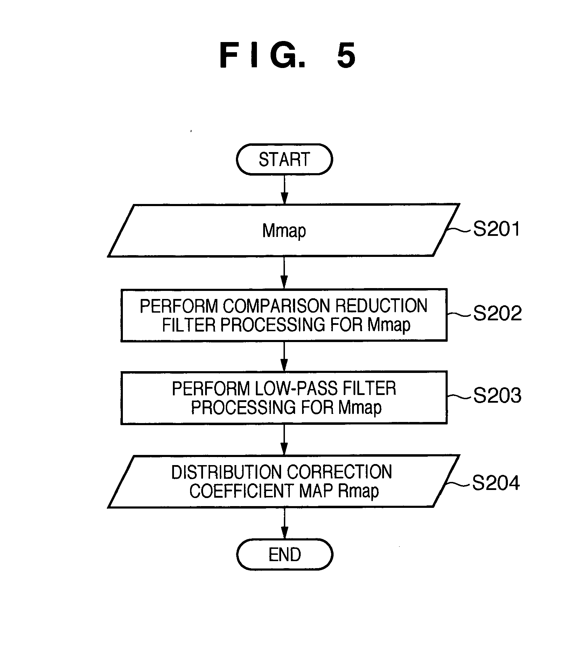

Fig. 5 is a flowchart showing an example of processing in the distribution correction coefficient generating unit 104.

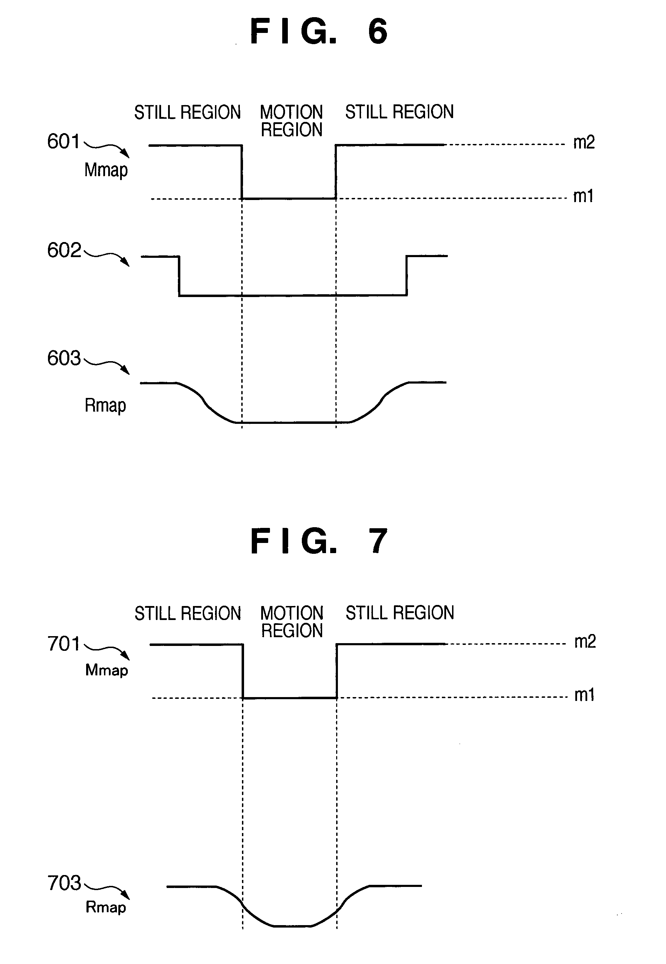

This processing starts when the degree-of-motion map $M_{map}$ is input to the distribution correction coefficient generating unit 104 (step S201). In this case, as indicated by "601" in Fig. 6, according to the degree-of-motion map $M_{map}$, m2 is given as a degree of motion to a region determined as a still region, and m1 is given as a degree of motion to a region determined as a motion region. Note that the abscissa represents the pixel position.

First of all, the distribution correction coefficient generating unit 104 performs comparison reduction filter processing for the degree-of-motion map $M_{map}$ (step S202). In this processing, the distribution correction coefficient generating unit 104 compares the value of the degree M of motion of a region of interest with the value of the degree M of motion of a neighboring region (a region of a predetermined range) to reduce the value of the degree M of motion of the region of interest. The filter has, for example, a characteristic that replaces a given value with the minimum value in the filter range. In the degree-of-motion map $M_{map}$, as indicated by "602" in Fig. 6, the value of the degree M of motion of a still region is reduced.

Subsequently, the distribution correction coefficient generating unit 104 executes low-pass filter processing for the result of the comparison reduction filter processing (step S203), and then outputs the processing result as the distribution correction coefficient map $R_{map}$ to the distribution processing unit 106 (step S204). As indicated by "603" in Fig. 6, in the distribution correction coefficient map $R_{map}$ to be output, signals in the high frequency region are removed by low-pass filter processing. As a result, a spatially smooth value is obtained. As indicated by "603" in Fig. 6, if a still region is adjacent to a motion region, the value of the distribution correction coefficient R in a predetermined range up to a boundary position where the still region contacts the motion region is continuously attenuated.

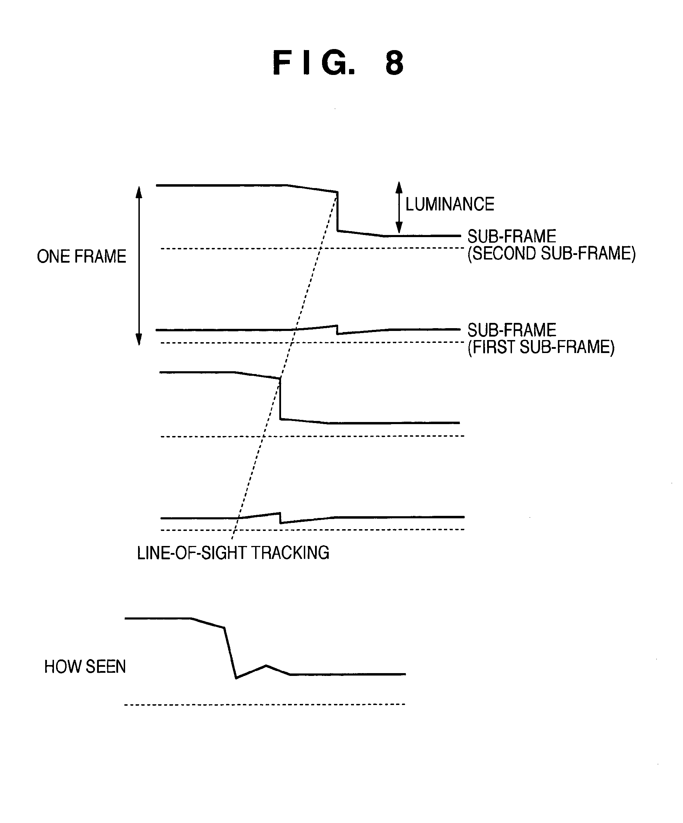

As described above, the distribution correction coefficient generating unit 104 in this embodiment changes the distribution correction coefficient R for each region in a frame. In this changing operation, the distribution correction coefficient generating unit 104 smoothly changes the distribution correction coefficient R spatially by smoothing the degree-of-motion map $M_{map}$ by low-pass filter processing. The reason that comparison reduction filter processing is performed before low-pass filter processing in this case is that if the distribution correction coefficient map $R_{map}$ is generated without comparison reduction filter processing, the value of an end portion of the motion region in a sub-frame increases as shown in Fig. 7. In this case, as shown in Fig. 8, an image collapses at the boundary between the still region and the motion region.

It is preferable to smooth the distribution correction coefficient R only in the still region without performing it in the motion region.

The difference processing unit 107 outputs, as the sub-frame f205, the result obtained by calculating the difference between the frame f201 held in the frame memory 102 and the sub-frame f204. The sum of sub-frames to be output therefore matches the frame held in the frame memory 102. In the case of an impulse type display apparatus, if the sums of signals displayed within an arbitrary time are equal, the apparent brightnesses look almost equal. It is therefore possible to keep the brightness of a frame before and after frame rate conversion almost equal.

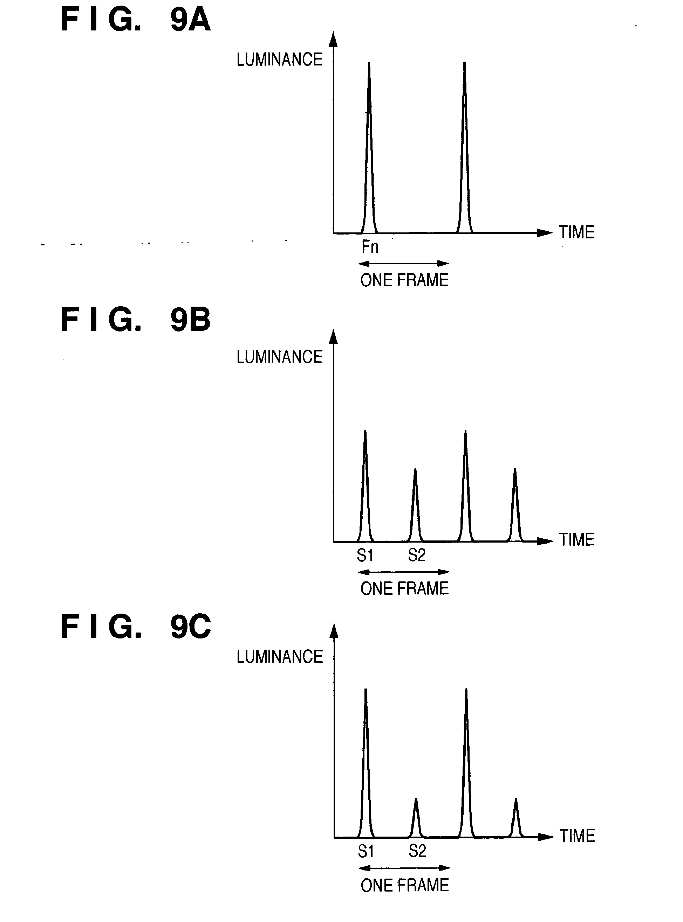

In this case, Fig. 9A shows the frame f201 held in the frame memory 102, and Figs. 9B and 9C show outputs when the distribution correction coefficient map $R_{map}$ changes.

As described above, the distribution correction coefficient R corresponding to a region with a small amount of motion is set to a large value. For this reason, in the sub-frame f204 output as a temporally succeeding sub-frame in one frame period, the amount of distribution of an output value corresponding to the region increases. The waveform shown in Fig. 9B indicates the luminance of each sub-frame in this region in this case. Although flicker tends to occur in a region with a small amount of motion, since the value of this region in the sub-frame f204 is ensured by a level at which flicker can be reduced, the occurrence of flicker can be prevented.

In contrast, as described above, the distribution correction coefficient R corresponding to a region with a large amount of motion is set to a small value. For this reason, in the sub-frame f204 output as a temporally succeeding sub-frame in one frame period, the amount of distribution of an output value corresponding to the region decreases. The waveform shown in Fig. 9C indicates the luminance of each sub-frame in this region in this case. Since flicker is not easily detected in a region with a large amount of motion, even if the value of this region in the sub-frame f204 is small, the possibility of the occurrence of flicker is low.

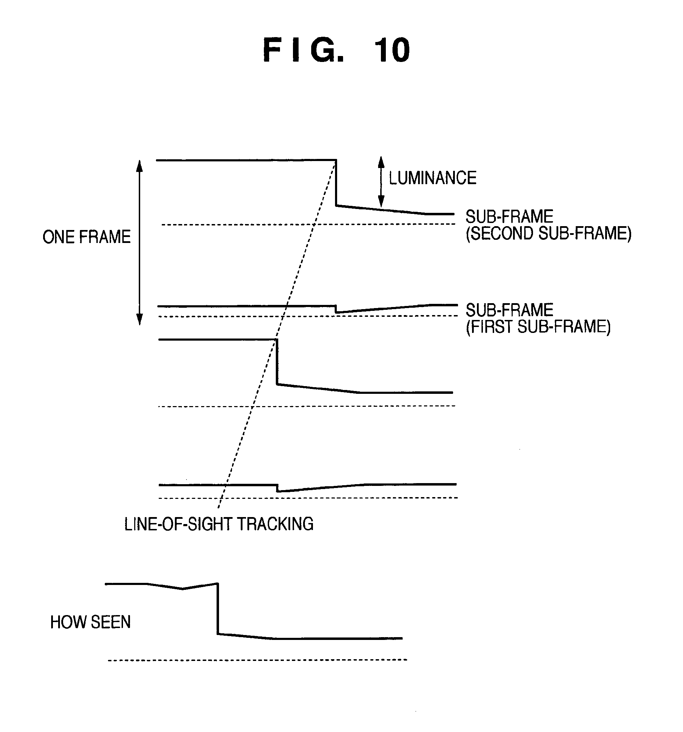

In this case, for example, the relationship shown in Fig. 10 indicates an outline of a display output in a case in which the luminance of each sub-frame is represented by the waveform shown in Fig. 9C and the manner of how the display output is visually perceived. The relationship between an outline of the display output and the manner of how the display output is seen, which is shown in Fig. 10, reveals that pseudo-contour and image collapse are reduced as compared with the case shown in Fig. 8.

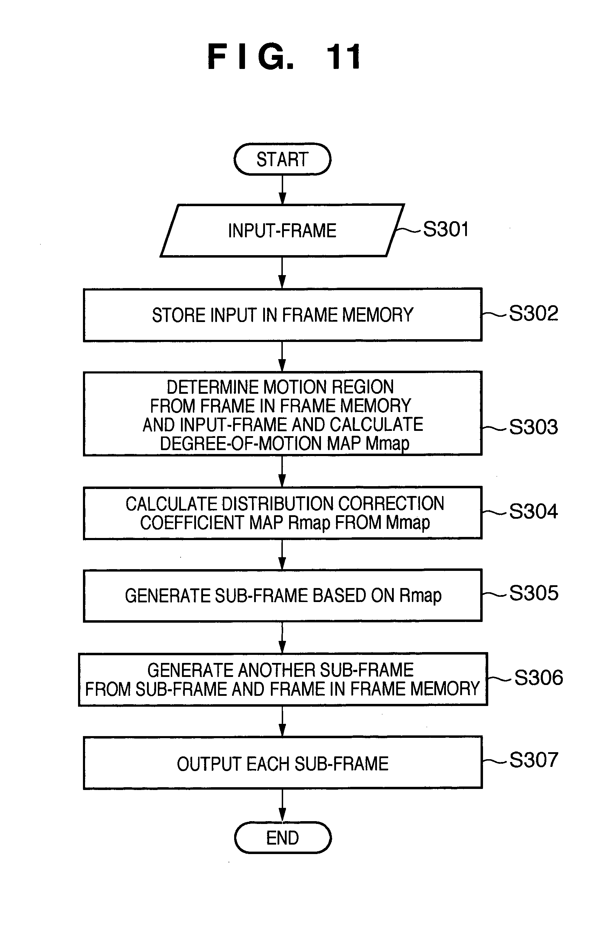

A processing sequence in the frame rate conversion apparatus shown in Fig. 1 will be described next with reference to Fig. 11.

Upon receiving the input-frame f200 (step S301), the frame rate conversion apparatus stores the frame in the frame memory 102 (step S302). Upon completion of storage of this frame, the frame rate conversion apparatus causes the motion region detection unit 103 to compare the input-frame f200 with the frame which has already been stored in the frame memory 102. The frame rate conversion apparatus then calculates the degree M of motion for each region in the frame f201 stored in the frame memory 102 and outputs the degree-of-motion map $M_{map}$ (step S303).

Subsequently, the frame rate conversion apparatus causes the distribution correction coefficient generating unit 104 to execute filter processing for the calculated degree-of-motion map $M_{map}$ to calculate the result as the distribution correction coefficient map $R_{map}$ (step S304). The frame rate conversion apparatus causes the distribution processing unit 106 to convert the value of the frame f201, which has already been stored in the frame memory 102, in accordance with the basic distribution function and the distribution correction coefficient map $R_{map}$ and generates the sub-frame f204 (step S305).

Upon completing generation of the sub-frame f204, the frame rate conversion apparatus causes the difference processing unit 107 to generate the sub-frame f205 from the difference between the frame f201 which has already been stored in the frame memory 102 and the sub-frame f204 (step S306). The frame rate conversion apparatus then causes the switch 108 to alternately switch and output the sub-frame f204 and the sub-frame f205 (step S307) Subsequently, every time an input-frame is input, the above processing is repeatedly executed.

As described above, according to this embodiment, a degree of motion is detected from each region of an image in a frame, and the amounts of distribution of the respective regions in the sub-frames f204 and f205 are determined in accordance with the detection result. This makes it possible to reduce pseudo-contour and image collapse while maintaining the effect of reducing flicker.

The above is a typical embodiment of the present invention. However, the present invention is not limited to the above embodiment shown in the accompanying drawings and can be modified and executed as needed within the scope of the present invention.

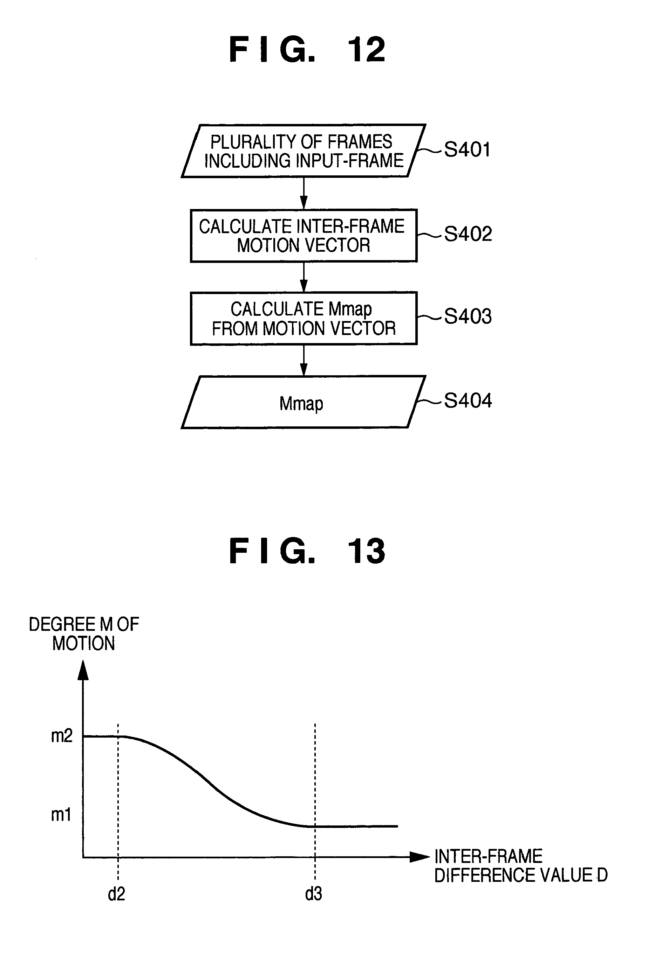

For example, the above embodiment has exemplified the case in which an inter-frame difference value is obtained, and the degree M of motion of each region in an image of a frame is calculated from the relationship between the difference value and a threshold. However, the present invention is not limited to this. For example, it suffices to calculate the vector of each region between frames and calculate the degree M of motion from the magnitude of the vector. A processing sequence in the motion region detection unit 103 in this case will be described with reference to Fig. 12. The motion region detection unit 103 calculates an inter-frame motion vector from an input-frame and a frame input before (for example, immediately before) the input-frame (steps S401 and S402). The motion region detection unit 103 then calculates and outputs the degree M of motion from the motion vector (steps S403 and S404). Note that it suffices to calculate the degree M of motion on the basis of the magnitude of the motion vector by the same method as that described with reference to Fig. 4. Using a motion vector makes it possible to recognize the magnitude of the motion of each region in an image of a frame more accurately.

The above embodiment has exemplified the case in which the degree M of motion is a binary value (m1, m2). However, the present invention is not limited to this. For example, as shown in Fig. 13, it suffices to output m2 if the inter-frame difference value D is less than or equal to a threshold d2 as the first value and to output m1 if the inter-frame difference value D is larger than a threshold d3 as the second value. If the inter-frame difference value D is between d2 and d3, a value between m2 and m1 is output as the degree M of motion (in this case, the degree M of motion indicates the degree of stillness). In this case, if the inter-frame difference value D is between d2 and d3, the value of the degree M of motion to be output monotonously changes (decreases) with an increase in the difference value. This reflects the continuity of the magnitude of the motion. Obviously, even when the degree M of motion is obtained from the above motion vector, the degree M of motion can be obtained by using this method.

The present invention can adopt embodiments in the forms of, for example, a system, apparatus, method, program, and storage medium. The present invention may be applied to either a system constituted by a plurality of devices, or an apparatus consisting of a single device.

The present invention includes a case wherein the functions of the aforementioned embodiments are achieved when a software program is directly or remotely supplied to a system or apparatus, and a computer incorporated in that system or apparatus reads out and executes the supplied program codes. The program to be supplied in this case is a computer program corresponding to the illustrated flowcharts in the embodiments.

Therefore, the program codes themselves installed in a computer to implement the functional processing of the present invention using the computer also implement the present invention. That is, the present invention includes the computer program itself for implementing the functional processing of the present invention. In this case, the form of program is not particularly limited, and an object code, a program to be executed by an interpreter, script data to be supplied to an OS (Operating System), and the like may be used as long as they have the functions of the program.

As a computer-readable storage medium for supplying the computer program, the following media can be used. As another program supply method, the user establishes connection to a website on the Internet using a browser on a client computer, and downloads the computer program of the present invention from the website onto a recording medium such as a hard disk.

The functions of the aforementioned embodiments can be implemented when the computer executes the readout program. In addition, the functions of the aforementioned embodiments may be implemented in collaboration with an OS or the like running on the computer based on an instruction of that program. In this case, the OS or the like executes some or all of actual processes, which implement the functions of the aforementioned embodiments.

As has been described above, according to the present invention, it is possible to suppress pseudo-contour and image collapse while maintaining the effect of reducing flicker.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A frame rate conversion apparatus for performing frame rate conversion upon distributing an input-frame into a plurality of sub-frames detects the degree of motion of each region including one pixel or a plurality of pixels in the input-frame, determines the amount of distribution of an output value in each region in the plurality of sub-frames in accordance with the detected degree of motion of each region, and outputs the plurality of sub-frames to which output values are distributed in accordance with the determined amounts of distribution.

**Claims**

1. A frame rate conversion apparatus for performing frame rate conversion by distributing an input-frame (f201) into a first sub-frame (f204) to be output as temporally succeeding sub-frame and a second sub-frame (f205) to be output as temporally preceding sub-frame, the apparatus comprising:

   a detection means (103, S303) for detecting a degree of motion of each region, each region including a predetermined range of at least one pixel in the input-frame, wherein said detection means detects degrees of motion corresponding to a region with a large amount of motion and a region with a small amount of motion in accordance with a relationship between a motion of each region of an image of a frame input before the input-frame and a predetermined value;
   a determination means (104, S304) for generating a distribution correction coefficient map for a basic distribution function in each region in the first and second sub-frames in accordance with the degree of motion of each region detected by said detection means, wherein the basic distribution function is defined as a function that, when applied to each value of the input-frame, outputs the values of the first sub-frame when the input is a still image (Fig. 2),
   wherein said determination means, in the case of the region with a small amount of motion, sets the value of the distribution correction coefficient map for the region corresponding to the first sub-frame to be larger than the value of the distribution correction coefficient map for the same region of the first sub-frame in a case when said region has a large amount of motion (Fig. 4), and
   wherein for the region with the small amount of motion which is adjacent to the region with the large amount of motion, said determination means sets the value of the distribution correction coefficient map for the region corresponding to the first sub-frame so as to continuously decrease a value of the distribution correction coefficient map in the predetermined range in the region with the small amount of motion up to a boundary position where the region with the small amount of motion contacts the region with the large amount of motion (Fig. 6);
   a distribution processing means (106, S305) for converting each value of the input-frame to a value in the first sub-frame by applying said basic distribution function multiplied by the distribution correction coefficient map to each value of the input-frame, wherein each value of each region in the first sub-frame is decreased in accordance with the value of the distribution correction coefficient map;
   a difference processing means (107, S306) for generating the second sub-frame as difference between the first sub-frame and the input-frame; and
   a switching means (108, 5307) for switching between the first sub-frame and the second sub-frame in one frame period, and outputting the second sub-frame as the temporally preceding sub-frame and the first sub-frame as the temporally succeeding sub-frame.

2. The apparatus according to claim 1, wherein said detection means (S101~S104) calculates an inter-frame difference value in accordance with the input-frame and the frame input before the input-frame, and detects the degree of motion of each region of an image in the frame input before the input-frame in accordance with a relationship between the calculated difference value and a threshold.

3. The apparatus according to claim 1, wherein said detection means (S401~S404) calculates a motion vector of each region between frames in accordance with the input-frame and the frame input before the input-frame, and detects the degree of motion of each region of an image in the frame input before the input-frame in accordance with the calculated motion vector.

4. The apparatus according to claim 1, wherein
   said determination means, in the case of the region with a large amount of motion, sets a value of the distribution correction coefficient map for the region corresponding to the first sub-frame to be smaller than the value of the distribution correction coefficient map for the same region of the first sub-frame in a case when said region has a small amount of motion (Fig. 4).

5. The apparatus according to claim 1, wherein

a first value (d2) and a second value (d3) larger than the first value are set in advance,
said detection means detects the degrees of motion in accordance with the relationship between the motion of each region of the image in the frame input before the input-frame and one of the first value and the second value (Fig. 13).

6. The apparatus according to claim 5, wherein
said detection means, if a motion of a region of an image in the frame input before the input-frame is between the first value and the second value, detects the degree of motion corresponding to the region in accordance with the motion of the region and a degree of motion that monotonously changes between the first value and the second value, and
said determination means, if the motion of the region is between the first value and the second value, sets the value of the distribution correction coefficient map for the region corresponding to the first sub-frame to be smaller than the value of the distribution correction coefficient map for the same region of the first sub-frame in a case when said region has a small amount of motion,
wherein the value of the distribution correction coefficient map set by said determination means, if the motion of the region is between the first value and the second value, continuously changes in accordance with the detected degree of motion (Fig. 13).

7. A frame rate conversion method of performing frame rate conversion by distributing an input-frame (f201) into a first sub-frame (f204) to be output as temporally succeeding sub-frame and a second sub-frame (f205) to be output as temporally preceding sub-frame, the method comprising:

detecting (S303) a degree of motion of each region, each region including a predetermined range of at least one pixel in the input-frame, wherein the detecting step comprises detecting degrees of motion corresponding to a region with a large amount of motion and a region with a small amount of motion in accordance with a relationship between a motion of each region of an image of a frame input before the input-frame and a predetermined value;
generating (S304) a distribution correction coefficient map for a basic distribution function in each region in the first and second sub-frames in accordance with the degree of motion of each region detected in said detection step, wherein the basic distribution function is defined as a function that, when applied to each value of the input-frame, outputs the values of the first sub-frame when the input is a still image (Fig. 2),
wherein the generating step comprises setting, in the case of the region with a small amount of motion, the value of the distribution correction coefficient map for the region corresponding to the first sub-frame to be larger than the value of the distribution correction coefficient map for the same region of the first sub-frame in a case when said region has a large amount of motion (Fig. 4), and
wherein for the region with the small amount of motion which is adjacent to the region with the large amount of motion, the value of the distribution correction coefficient map for the region corresponding to the first sub-frame is set so as to continuously decrease a value of the distribution correction coefficient map in the predetermined range in the region with the small amount of motion up to a boundary position where the region with the small amount of motion contacts the region with the large amount of motion (Fig. 6);
converting (S305) each value of the input-frame to a value in the first sub-frame by applying said basic distribution function multiplied by the distribution correction coefficient map to each value of the input-frame, wherein each value of each region in the first sub-frame is decreased in accordance with the value of the distribution correction coefficient map;
generating (S306) the second sub-frame as difference between the first sub-frame and the input-frame; and
switching (S307) between the first sub-frame and the second sub-frame in one frame period, and outputting the second sub-frame as the temporally preceding sub-frame and the first sub-frame as the temporally succeeding sub-frame.

8. A computer-readable storage medium storing a computer program of causing a computer incorporated in a frame rate conversion apparatus to perform the steps of the method of claim 7.

**Patentansprüche**

1. Bildfolgefrequenzumwandlungsvorrichtung zur Durchführung einer Bildfolgefrequenzumwandlung durch Verteilen einer Eingangsbildfolge (f201) in eine erste Unterbildfolge (f204), die als zeitlich nachfolgende Unterbildfolge auszugeben ist, und eine zweite Unterbildfolge (f205), die als zeitlich vorausgehende Unterbildfolge auszugeben ist, mit einer Erfassungseinrichtung (103, S303) zur Erfassung eines Bewegungsgrades jeder Region, wobei jede Region einen vorbestimmten Bereich zumindest eines Bildelements in der Eingangsbildfolge enthält, wobei die Erfassungseinrichtung Bewegungsgrade, die einer Region mit einem großen Bewegungsausmaß und einer Region mit einem geringen Bewegungsausmaß entsprechen, gemäß einer Beziehung zwischen einer Bewegung jeder Region eines Bildes einer vor der Eingangsbildfolge eingegebenen Bildfolge und einem vorbestimmten Wert erfasst,

einer Bestimmungseinrichtung (104, S304) zur Erzeugung einer Verteilungskorrekturkoeffizientenabbildung für eine Basisverteilungsfunktion in jeder Region in der ersten und der zweiten Unterbildfolge entsprechend dem durch die Erfassungseinrichtung erfassten Bewegungsgrad jeder Region, wobei die Basisverteilungsfunktion als Funktion definiert ist, die bei Anwendung auf jeden Wert der Eingangsbildfolge die Werte der ersten Unterbildfolge ausgibt, wenn das Bild ein Stehbild ist (Fig. 2),

wobei die Bestimmungseinrichtung im Fall der Region mit einem geringen Bewegungsausmaß den Wert der Verteilungskorrekturkoeffizientenabbildung für die der ersten Unterbildfolge entsprechende Region größer als den Wert der Verteilungskorrekturkoeffizientenabbildung für dieselbe Region der ersten Unterbildfolge in einem Fall einstellt, wenn die Region ein großes Bewegungsausmaß aufweist (Fig. 4), und

wobei für die Region mit dem geringen Bewegungsausmaß, die an die Region mit dem großen Bewegungsausmaß angrenzt, die Bestimmungseinrichtung den Wert der Verteilungskorrekturkoeffizientenabbildung für die der ersten Unterbildfolge entsprechende Region derart einstellt, dass sich ein Wert der Verteilungskorrekturkoeffizientenabbildung in dem vorbestimmten Bereich in der Region mit dem geringen Bewegungsausmaß bis zu einer Randposition kontinuierlich verringert, wo die Region mit dem geringen Bewegungsausmaß die Region mit dem großen Bewegungsausmaß berührt (Fig. 6),

einer Verteilungsverarbeitungseinrichtung (106, S305) zur Umwandlung jedes Werts der Eingangsbildfolge in einen Wert in der ersten Unterbildfolge durch Anwenden der Basisverteilungsfunktion multipliziert mit der Verteilungskorrekturkoeffizientenabbildung bei jedem Wert der Eingangsbildfolge, wobei jeder Wert jeder Region in der ersten Unterbildfolge entsprechend dem Wert der Verteilungskorrekturkoeffizientenabbildung verringert wird,

einer Differenzverarbeitungseinrichtung (107, S306) zur Erzeugung der zweiten Unterbildfolge als Differenz zwischen der ersten Unterbildfolge und der Eingangsbildfolge, und

einer Schalteinrichtung (108, S307) zum Umschalten zwischen der ersten Unterbildfolge und der zweiten Unterbildfolge in einer Bildfolgenperiode und Ausgeben der zweiten Unterbildfolge als die zeitlich vorausgehende Unterbildfolge und der ersten Unterbildfolge als die zeitlich nachfolgende Unterbildfolge.

2. Vorrichtung nach Anspruch 1, wobei die Erfassungseinrichtung (S101~S104) einen Zwischenbildfolgendifferenzwert entsprechend der Eingangsbildfolge und der vor der Eingangsbildfolge eingegebenen Bildfolge berechnet und den Bewegungsgrad jeder Region eines Bildes in der vor der Eingangsbildfolge eingegebenen Bildfolge entsprechend einer Beziehung zwischen dem berechneten Differenzwert und einem Schwellenwert erfasst.

3. Vorrichtung nach Anspruch 1, wobei die Erfassungseinrichtung (S401~S404) einen Bewegungsvektor jeder Region zwischen Bildfolgen entsprechend der Eingangsbildfolge und der vor der Eingangsbildfolge eingegebenen Bildfolge berechnet und den Bewegungsgrad jeder Region eines Bildes in der vor der Eingangsbildfolge eingegebenen Bildfolge entsprechend dem berechneten Bewegungsvektor erfasst.

4. Vorrichtung nach Anspruch 1, wobei
die Bestimmungseinrichtung im Fall der Region mit großem Bewegungsausmaß einen Wert der Verteilungskorrekturkoeffizientenabbildung für die der ersten Unterbildfolge entsprechende Region kleiner als den Wert der Verteilungskorrekturkoeffizientenabbildung für dieselbe Region der ersten Unterbildfolge in einem Fall einstellt, wenn die Region ein geringes Bewegungsausmaß aufweist (Fig. 4).

5. Vorrichtung nach Anspruch 1, wobei
ein erster Wert (d2) und ein zweiter Wert (d3), der größer als der erste Wert ist, vorab eingestellt werden, und die Erfassungseinrichtung die Bewegungsgrade entsprechend der Beziehung zwischen der Bewegung jeder Region des Bildes in der vor der Eingangsbildfolge eingegebenen Bildfolge und dem ersten Wert oder dem zweiten Wert erfasst (Fig. 13).

6. Vorrichtung nach Anspruch 5, wobei
die Erfassungseinrichtung dann, wenn eine Bewegung einer Region eines Bildes in der vor der Eingangsbildfolge eingegebenen Bildfolge zwischen dem ersten Wert und dem zweiten Wert liegt, den der Region entsprechenden Bewegungsgrad gemäß der Bewegung der Region und einem Bewegungsgrad erfasst, der sich monoton zwischen dem ersten Wert und dem zweiten Wert ändert, und
die Bestimmungseinrichtung dann, wenn die Bewegung der Region zwischen dem ersten Wert und dem zweiten Wert liegt, den Wert der Verteilungskorrekturkoeffizientenabbildung für die der ersten Unterbildfolge entsprechende Region kleiner als den Wert der Verteilungskorrekturkoeffizientenabbildung für dieselbe Region der ersten Unterbildfolge in einem Fall einstellt, wenn die Region ein geringes Bewegungsausmaß aufweist, wobei der durch die Bestimmungseinrichtung eingestellte Wert der Verteilungskorrekturkoeffizientenabbildung dann, wenn die Bewegung der Region zwischen dem ersten Wert und dem zweiten Wert liegt, sich entsprechend dem erfassten Bewegungsgrad kontinuierlich ändert (Fig. 13).

7. Bildfolgefrequenzumwandlungsverfahren zur Durchführung einer Bildfolgefrequenzumwandlung durch Verteilen einer Eingangsbildfolge (f201) in eine erste Unterbildfolge (f204), die als zeitlich nachfolgende Unterbildfolge auszugeben ist, und eine zweite Unterbildfolge (f205), die als zeitlich vorausgehende Unterbildfolge auszugeben ist, mit Erfassen (S303) eines Bewegungsgrades jeder Region, wobei jede Region einen vorbestimmten Bereich zumindest eines Bildelements in der Eingangsbildfolge enthält, wobei der Erfassungsschritt ein Erfassen von Bewegungsgraden, die einer Region mit einem großen Bewegungsausmaß und einer Region mit einem geringen Bewegungsausmaß entsprechen, entsprechend einer Beziehung zwischen einer Bewegung jeder Region eines Bildes einer vor der Eingangsbildfolge eingegebenen Bildfolge und einem vorbestimmten Wert umfasst, Erzeugen (S304) einer Verteilungskorrekturkoeffizientenabbildung für eine Basisverteilungsfunktion in jeder Region in der ersten und der zweiten Unterbildfolge entsprechend dem im Erfassungsschritt erfassten Bewegungsgrad jeder Region, wobei die Basisverteilungsfunktion als Funktion definiert ist, die bei Anwendung bei jedem Wert der Eingangsbildfolge die Werte der ersten Unterbildfolge ausgibt, wenn die Eingabe ein Stehbild ist (Fig. 2), wobei der Erzeugungsschritt ein Einstellen des Werts der Verteilungskorrekturkoeffizientenabbildung für die der ersten Unterbildfolge entsprechende Region in dem Fall der Region mit einem geringen Bewegungsausmaß größer als den Wert der Verteilungskorrekturkoeffizientenabbildung für dieselbe Region der ersten Unterbildfolge in einem Fall umfasst, wenn die Region ein großes Bewegungsausmaß aufweist (Fig. 4), und wobei für die Region mit dem geringen Bewegungsausmaß, die an die Region mit dem großen Bewegungsausmaß angrenzt, der Wert der Verteilungskorrekturkoeffizientenabbildung für die der ersten Unterbildfolge entsprechende Region derart eingestellt wird, dass ein Wert der Verteilungskorrekturkoeffizientenabbildung in dem vorbestimmten Bereich in der Region mit dem geringen Bewegungsausmaß kontinuierlich bis zu einer Randposition verringert wird, wo die Region mit dem geringen Bewegungsausmaß die Region mit dem großen Bewegungsausmaß berührt (Fig. 6), Umwandeln (S305) jedes Werts der Eingangsbildfolge in einen Wert in der ersten Unterbildfolge durch Anwenden der Basisverteilungsfunktion multipliziert mit der Verteilungskorrekturkoeffizientenabbildung bei jedem Wert der Eingangsbildfolge, wobei jeder Wert jeder Region in der ersten Unterbildfolge entsprechend dem Wert der Verteilungskorrekturkoeffizientenabbildung verringert wird, Erzeugen (S306) der zweiten Unterbildfolge als Differenz zwischen der ersten Unterbildfolge und der Eingangsbildfolge, und Umschalten (S307) zwischen der ersten Unterbildfolge und der zweiten Unterbildfolge in einer Bildfolgenperiode und Ausgeben der zweiten Unterbildfolge als die zeitlich vorausgehende Unterbildfolge und der ersten Unterbildfolge als die zeitlich nachfolgende Unterbildfolge.

8. Computerlesbares Speichermedium, das ein Computerprogramm zur Veranlassung eines in einer Bildfolgefrequenzumwandlungsvorrichtung enthaltenen Computers zur Durchführung der Schritte des Verfahrens nach Anspruch 7 speichert.

**Revendications**

1. Dispositif de conversion de fréquence d'image destiné à effectuer une conversion de fréquence d'image en répartissant une trame d'entrée (f201) entre une première sous-trame (f204) à sortir en tant que sous-trame temporellement suivante et une seconde sous-trame (f205) à sortir en tant que sous-trame temporellement précédente, le dispositif comprenant :

un moyen (103, S303) de détection destiné à détecter un degré de mouvement de chaque région, chaque région incluant une plage prédéterminée d'au moins un pixel dans la trame d'entrée, dans lequel ledit moyen de détection détecte des degrés de mouvement correspondant à une région avec une grande quantité de mouvement et à une région avec une petite quantité de mouvement en fonction d'une relation entre un mouvement de chaque région d'une image d'une trame entrée avant la trame d'entrée et une valeur prédéterminée ;
un moyen (104, S304) de détermination destiné à engendrer une carte de coefficients de correction de répartition pour une fonction de répartition de base dans chaque région dans les première et seconde sous-trames en fonction du degré de mouvement de chaque région détecté par ledit moyen de détection, dans lequel la fonction de répartition de base est définie comme une fonction qui, lorsqu'elle est appliquée à chaque valeur de la trame d'entrée, sort les valeurs de la première sous-trame lorsque l'entrée est une image fixe (figure 2),

dans lequel ledit moyen de détermination, dans le cas de la région avec une petite quantité de mouvement, fixe la valeur de la carte de coefficients de correction de répartition pour la région correspondant à la première sous-trame pour qu'elle soit plus grande que la valeur de la carte de coefficients de correction de répartition pour la même région de la première sous-trame dans le cas où ladite région a une grande quantité de mouvement (figure 4), et

dans lequel, pour la région avec la petite quantité de mouvement qui est adjacente à la région avec la grande quantité de mouvement, ledit moyen de détermination fixe la valeur de la carte de coefficients de correction de distribution pour la région correspondant à la première sous-trame de façon à diminuer continuellement la valeur de la carte de coefficients de correction de répartition dans la plage prédéterminée de la région avec la petite quantité de mouvement jusqu'à une position de frontière où la région avec la petite quantité de mouvement contacte la région avec la grande quantité de mouvement (figure 6) ;

un moyen (106, S305) de traitement de répartition destiné à convertir chaque valeur de la trame d'entrée en une valeur de la première sous-trame en appliquant, à chaque valeur de la trame d'entrée, ladite fonction de répartition de base multipliée par la carte de coefficients de correction de répartition dans lequel chaque valeur de chaque région de la première sous-trame est diminuée en fonction de la valeur de la carte de coefficients de correction de distribution ;

un moyen (107, S306) de traitement de différence destiné à engendrer la seconde sous-trame sous forme de la différence entre la première sous-trame et la trame d'entrée ; et

un moyen (108, S307) de commutation destiné à commuter entre la première sous-trame et la seconde sous-trame dans une seule période de trame, et à sortir la seconde sous-trame en tant que la sous-trame temporellement précédente et la première sous-trame en tant que la sous-trame temporellement suivante.

2.  Dispositif selon la revendication 1, dans lequel ledit moyen (S101 à S104) de détection calcule une valeur de différence intertrame en fonction de la trame d'entrée et de la trame entrée avant la trame d'entrée, et détecte le degré de mouvement de chaque région d'une image de la trame entrée avant la trame d'entrée en fonction de la relation entre la valeur de différence calculée et un seuil.

3.  Dispositif selon la revendication 1, dans lequel ledit moyen (S401 à S404) de détection calcule un vecteur mouvement de chaque région entre des trames en fonction de la trame d'entrée et de la trame entrée avant la trame d'entrée, et détecte le degré de mouvement de chaque région d'une image de la trame entrée avant la trame d'entrée en fonction du vecteur mouvement calculé.

4.  Dispositif selon la revendication 1, dans lequel ledit moyen de détermination, dans le cas de la région avec une grande quantité de mouvement, fixe une valeur de la carte de coefficients de correction de répartition pour la région correspondant à la première sous-trame de façon qu'elle soit plus petite que la valeur de la carte de coefficients de correction de répartition pour la même région de la première sous-trame dans le cas où ladite région a une petite quantité de mouvement (figure 4).

5.  Dispositif selon la revendication 1,
dans lequel une première valeur (d2) et une seconde valeur (d3) plus grande que la première valeur sont fixées à l'avance,
dans lequel ledit moyen de détection détecte les degrés de mouvement en fonction de la relation entre le mouvement de chaque région de l'image dans la trame entrée avant la trame d'entrée et de l'une de la première valeur et de la seconde valeur (figure 13).

6.  Dispositif selon la revendication 5,
dans lequel ledit moyen de détection, si le mouvement d'une région d'une image de la trame entrée avant la trame d'entrée est entre la première valeur et la seconde valeur, détecte le degré de mouvement correspondant à la région en fonction du mouvement de la région et d'un degré de mouvement qui change de façon monotone entre la première valeur et la seconde valeur, et
dans lequel ledit moyen de détermination, si le mouvement de la région est entre la première valeur et la seconde valeur, fixe la valeur de la carte de coefficients de correction de répartition pour la région correspondant à la première sous-trame pour qu'elle soit plus petite que la valeur de la carte de coefficients de correction de répartition pour la même région de la première sous-trame dans le cas où ladite région a une petite quantité de mouvement,
dans lequel la valeur de la carte de coefficients de correction de répartition fixée par ledit moyen de détermination, si le mouvement de la région est entre la première valeur et la seconde valeur, change continuellement en fonction du degré détecté de mouvement (figure 13).

**7.** Procédé de conversion de fréquence d'image consistant à effectuer une conversion de fréquence d'image en répartissant une trame d'entrée (f201) entre une première sous-trame (f204) à sortir en tant que sous-trame temporellement suivante et une seconde sous-trame (f205) à sortir en tant que sous-trame temporellement précédente, le procédé comprenant :

la détection (S303) d'un degré de mouvement de chaque région, chaque région incluant une plage prédéterminée d'au moins un pixel dans la trame d'entrée, dans lequel ladite étape de détection comprend la détection de degrés de mouvement correspondant à une région avec une grande quantité de mouvement et à une région avec une petite quantité de mouvement en fonction d'une relation entre un mouvement de chaque région d'une image d'une trame entrée avant la trame d'entrée et une valeur prédéterminée ;

la génération (S304) d'une carte de coefficients de correction de répartition pour une fonction de répartition de base dans chaque région dans les première et seconde sous-trames en fonction du degré de mouvement de chaque région détecté à ladite étape de détection, dans lequel la fonction de répartition de base est définie comme une fonction qui, lorsqu'elle est appliquée à chaque valeur de la trame d'entrée, sort les valeurs de la première sous-trame lorsque l'entrée est une image fixe (figure 2),

dans lequel l'étape de génération comprend la fixation, dans le cas de la région avec une petite quantité de mouvement, de la valeur de la carte de coefficients de correction de répartition pour la région correspondant à la première sous-trame pour qu'elle soit plus grande que la valeur de la carte de coefficients de correction de répartition pour la même région de la première sous-trame dans le cas où ladite région a une grande quantité de mouvement (figure 4), et

dans lequel, pour la région avec la petite quantité de mouvement qui est adjacente à la région avec la grande quantité de mouvement, la valeur de la carte de coefficients de correction de distribution pour la région correspondant à la première sous-trame est fixée de façon à diminuer continuellement la valeur de la carte de coefficients de correction de répartition dans la plage prédéterminée de la région avec la petite quantité de mouvement jusqu'à une position de frontière où la région avec la petite quantité de mouvement contacte la région avec la grande quantité de mouvement (figure 6) ;

la conversion (S305) de chaque valeur de la trame d'entrée en une valeur de la première sous-trame en appliquant, à chaque valeur de la trame d'entrée, ladite fonction de répartition de base multipliée par la carte de coefficients de correction de répartition dans lequel chaque valeur de chaque région de la première sous-trame est diminuée en fonction de la valeur de la carte de coefficients de correction de distribution ;

la génération (S306) de la seconde sous-trame sous forme de la différence entre la première sous-trame et la trame d'entrée ; et

la commutation (S307) entre la première sous-trame et la seconde sous-trame dans une seule période de trame, et la sortie de la seconde sous-trame en tant que la sous-trame temporellement précédente et de la première sous-trame en tant que la sous-trame temporellement suivante.

**8.** Support de mémorisation lisible par processeur mémorisant un programme informatique consistant à faire exécuter les étapes du procédé selon la revendication 7 par un processeur incorporé dans un dispositif de conversion de fréquence d'image.

# F I G. 1

EP 2 124 430 B1

# F I G. 2

DISTRIBUTION
PROCESSING UNIT
OUTPUT f204

BASIC DISTRIBUTION FUNCTION (X)

DISTRIBUTION FUNCTION (X) =
Rmap(p) X BASIC DISTRIBUTION
FUNCTION (X)

INPUT f201(x) TO DISTRIBUTION
PROCESSING UNIT

# F I G. 3

PLURALITY OF FRAMES
INCLUDING INPUT-FRAME — S101

CALCULATE INTER-FRAME
DIFFERENCE D — S102

CALCULATE Mmap
FROM D — S103

Mmap — S104

# F I G. 4

DEGREE M OF MOTION

INTER-FRAME
DIFFERENCE VALUE D

# F I G. 5

```
          ┌─────────────┐
          │    START    │
          └─────────────┘
                 │
                 ▼
     ╱─────────────────────────╲
    ╱           Mmap            ╱────S201
   ╱─────────────────────────╱
                 │
                 ▼
     ┌─────────────────────────┐
     │ PERFORM COMPARISON       │
     │ REDUCTION                │────S202
     │ FILTER PROCESSING FOR    │
     │ Mmap                     │
     └─────────────────────────┘
                 │
                 ▼
     ┌─────────────────────────┐
     │ PERFORM LOW-PASS FILTER  │
     │ PROCESSING FOR Mmap      │────S203
     └─────────────────────────┘
                 │
                 ▼
     ╱─────────────────────────╲
    ╱  DISTRIBUTION CORRECTION   ╱────S204
   ╱  COEFFICIENT MAP Rmap     ╱
   ╱─────────────────────────╱
                 │
                 ▼
          ┌─────────────┐
          │     END     │
          └─────────────┘
```

# FIG. 6

STILL REGION   MOTION   STILL REGION
                REGION

601 Mmap ........................................ m2

................................. m1

602

603 Rmap

# FIG. 7

STILL REGION   MOTION   STILL REGION
                REGION

701 Mmap ........................................ m2

................................. m1

703 Rmap

# F I G.  8

ONE FRAME

LUMINANCE

SUB-FRAME
(SECOND SUB-FRAME)

SUB-FRAME
(FIRST SUB-FRAME)

LINE-OF-SIGHT TRACKING

HOW SEEN

# F I G. 9A

LUMINANCE

TIME

Fn

ONE FRAME

# F I G. 9B

LUMINANCE

TIME

S1    S2

ONE FRAME

# F I G. 9C

LUMINANCE

TIME

S1    S2

ONE FRAME

# F I G. 10

ONE FRAME

LUMINANCE

SUB-FRAME
(SECOND SUB-FRAME)

SUB-FRAME
(FIRST SUB-FRAME)

LINE-OF-SIGHT TRACKING

HOW SEEN

# F I G. 11

START

INPUT-FRAME — S301

STORE INPUT IN FRAME MEMORY — S302

DETERMINE MOTION REGION
FROM FRAME IN FRAME MEMORY
AND INPUT-FRAME AND CALCULATE
DEGREE-OF-MOTION MAP Mmap — S303

CALCULATE DISTRIBUTION CORRECTION
COEFFICIENT MAP Rmap FROM Mmap — S304

GENERATE SUB-FRAME BASED ON Rmap — S305

GENERATE ANOTHER SUB-FRAME
FROM SUB-FRAME AND FRAME IN FRAME MEMORY — S306

OUTPUT EACH SUB-FRAME — S307

END

# F I G. 12

PLURALITY OF FRAMES
INCLUDING INPUT-FRAME —S401

↓

CALCULATE INTER-FRAME
MOTION VECTOR —S402

↓

CALCULATE Mmap
FROM MOTION VECTOR —S403

↓

Mmap —S404

# F I G. 13

DEGREE M OF
MOTION

m2

m1

d2          d3          INTER-FRAME
                        DIFFERENCE VALUE D

# F I G. 14A
## PRIOR ART

EMISSION LUMINANCE

TIME

ONE FRAME

# F I G. 14B
## PRIOR ART

EMISSION LUMINANCE

TIME

ONE FRAME

# F I G. 15
## PRIOR ART

ONE FRAME

LUMINANCE SUB-FRAME 1

SUB-FRAME 2

LINE-OF-SIGHT TRACKING

HOW SEEN

# F I G. 16
## PRIOR ART

LARGE AMOUNT OF MOTION

SMALL AMOUNT OF MOTION

LUMINANCE

SUB-FRAME 1

ONE FRAME

SUB-FRAME 2

LINE-OF-SIGHT TRACKING

HOW SEEN

**EP 2 124 430 B1**

## REFERENCES CITED IN THE DESCRIPTION

### Patent documents cited in the description

- JP 2007052184 A

- US 2007273628 A